# DEMANDE DE BREVET EUROPEEN

(11) **EP 1 271 984 A1**
(43) Date de publication de la demande: **02.01.2003**
(21) Numéro de dépôt: 02291377.6
(22) Date de dépôt: 04.06.2002
(51) Int. Cl.: H04Q 7/36, H04Q 7/30

(54) **Réseau de communication cellulaire à cellule suiveuse**

(30) Priorité: 15.06.2001 FR 0107887
(71) Demandeur: Thales, 75008 Paris (FR)
(72) Inventeur: Miconi, Patrice, Thales Intellectual Property, 94117 Arcueil Cedex (FR)
(74) Mandataire: Dudouit, Isabelle

(57) **Abrégé**

La présente invention concerne un procédé d'optimisation du trafic d'un réseau de communication cellulaire, les cellules de ce réseau, et les stations de base permettant de générer lesdites cellules.

Une station de base B1 selon la présente invention comprend au moins les éléments suivants :
(a) des éléments rayonnants E1, E2, E3, ..., E27 répartis dans la zone de couverture de ladite station ;
(b) des émetteurs-récepteurs T1, T2, T3, ..., T6 ;
(c) un sélecteur SL, permettant de relier N groupes d'éléments rayonnants à N groupes d'émetteurs-récepteurs, pour créer N cellules C1, C2 dont la position est un paramètre variable.

Les positions des cellules générées C1, C2 sont adaptées à la position de groupes de stations mobiles G1, G2 de manière à suivre leurs déplacements. On appelle ces cellules C1, C2 des cellules suiveuses. Un groupe de stations mobiles peut être constitué par l'ensemble des stations mobiles (téléphones par exemple) des passagers d'un train.

L'invention s'applique notamment à la couverture dans les trains des réseaux de communication cellulaire public ou privés de type GSM, DCS, UMTS, GSM-R.

## Description

La présente invention concerne un procédé d'optimisation du trafic d'un réseau de communication cellulaire, les cellules de ce réseau, et les stations de base permettant de générer lesdites cellules. Elle s'applique notamment à la couverture dans les trains des réseaux de communication cellulaire public ou privés de type GSM, DCS, UMTS, GSM-R.

L'espace couvert par un réseau de communication cellulaire est divisé en cellules contiguës. En fonction de sa position, une station mobile (téléphone cellulaire par exemple) est reliée par onde radio à l'une des cellules du réseau. Dans chaque cellule, seules certaines fréquences du spectre sont utilisées. Ces fréquences sont différentes entre cellules voisines de manière à éviter les interférences. Par contre, des cellules éloignées peuvent utiliser les mêmes fréquences. En d'autres termes, le spectre radio est divisé entre cellules voisines, et réutilisés dans des cellules distantes. L'émission et la réception radio dans l'espace couvert est assurée par un ensemble de stations émettrices/réceptrices. Généralement, une station émettrice-réceptrice est au centre de chaque cellule. Ces stations sont appelées des stations de bases ou BTS (acronyme de l'expression anglo-saxonne « Base Transceiver Station »).

Un réseau de communication cellulaire est dimensionné à partir du besoin de trafic le plus élevé pour assurer un service de bonne qualité. Ce dimensionnement est effectué en agissant sur le nombre de cellule. Ainsi, l'espace est couvert de manière dense par des cellules petites dans les zones urbaines, et de manière peu dense par des grandes cellules dans les zones rurales. Cependant le besoin de trafic est très variable. Le besoin de trafic est la plupart du temps très inférieur au besoin de trafic maximum. Il en résulte une sous utilisation des capacités de communication du réseau la plupart du temps. Cette sous utilisation augmente le coût du service offert par abonné. En effet, le coût d'installation et de maintenance des stations de base du réseau est proportionnel au nombre de cellules.

Il serait donc souhaitable d'augmenter le rendement des réseaux pour en diminuer le coût d'installation et de maintenance, tout en assurant un service de même qualité. C'est le problème que s'est posé la Demanderesse dans le cas de groupes de stations mobiles en mouvement. Un groupe de stations mobiles peut être constitué par l'ensemble des téléphones cellulaires des passagers d'un train par exemple.

A cet effet, l'invention concerne un procédé d'optimisation du trafic d'un réseau de communication cellulaire. Selon ce procédé, les positions de N cellules dudit réseau sont adaptées aux positions de N groupes de stations mobiles présentes sur ledit réseau, de manière à suivre le déplacement desdits groupes de stations mobiles.

Selon un mode de réalisation avantageux, les positions des N groupes de stations mobiles présentes sur ledit réseau sont mesurées de façon répétitive, pour adapter les positions des N cellules à partir desdites mesures.

L'invention concerne aussi une cellule d'un réseau de communication cellulaire. Selon l'invention, elle est générée par des moyens de génération qui adaptent sa position à la position d'un groupe de stations mobiles présentes sur ledit réseau, de manière à suivre le déplacement dudit groupe de stations mobiles.

L'invention concerne aussi une station de base d'un réseau de communication cellulaire. La station de base selon l'invention comprend au moins les éléments suivants :
(a) des éléments rayonnants répartis dans la zone de couverture de ladite station ;
(b) des émetteurs-récepteurs ;
(c) un sélecteur, permettant de relier N groupes d'éléments rayonnants à N groupes d'émetteurs-récepteurs, pour créer N cellules dont la position est un paramètre variable.

L'invention a pour principaux avantages qu'elle permet de modifier la géométrie des cellules de manière instantanées, de limiter le nombre de transferts intercellulaires, qu'elle est compatible avec tout système de communication cellulaire, privé ou public, numérique ou analogique. On peut citer notamment les systèmes de communication GSM, DCS, UMTS (abréviations des expressions anglo-saxonnes « Global System for Mobile », « Digital Communication System », « Universal Mobile Communication System »). On pourra se référer aux articles suivants pour plus d'information sur les réseaux de communication cellulaire :
- « Radiocommunications personnelles », Techniques de l'Ingénieur, volume TE 3, E 7330 (mars 1996), de Oliver BLONDEAU, Christophe DESSEIGNES et al. ;
- « Réseaux cellulaires », Techniques de l'Ingénieur, volume TE 3, E 7360 (février 1999), E 7361 (novembre 1998), E 7362 (février 1999), E 7364 (févier 1999), E 7366 (février 1999), E 7368 (février 1999), E 7369 (février 1999), de Jean CELLMER.

La présente invention sera mieux comprise à la lecture de la description détaillée d'un mode réalisation, pris à titre d'exemple non limitatif et illustré par le dessin annexé, sur lequel :
- les figures 1 et 2 sont des schémas d'un exemple de réalisation d'un réseau de communication cellulaire selon l'invention, ledit réseau couvrant un tronçon de chemin de fer sur lequel circulent deux trains ;
- la figure 3 est un schéma d'un détail d'un élément physique du réseau illustré figures 1 et 2 ;
- la figure 4 est un schéma d'un mode de réalisation avantageux de réalisation du réseau illustré figures 1 et 2, dans lequel un placé un système de détection ;
- les figures 5 et 6 sont des schémas de positions avantageuses pour les trains des éléments rayonnants d'un réseau de communication selon l'invention.

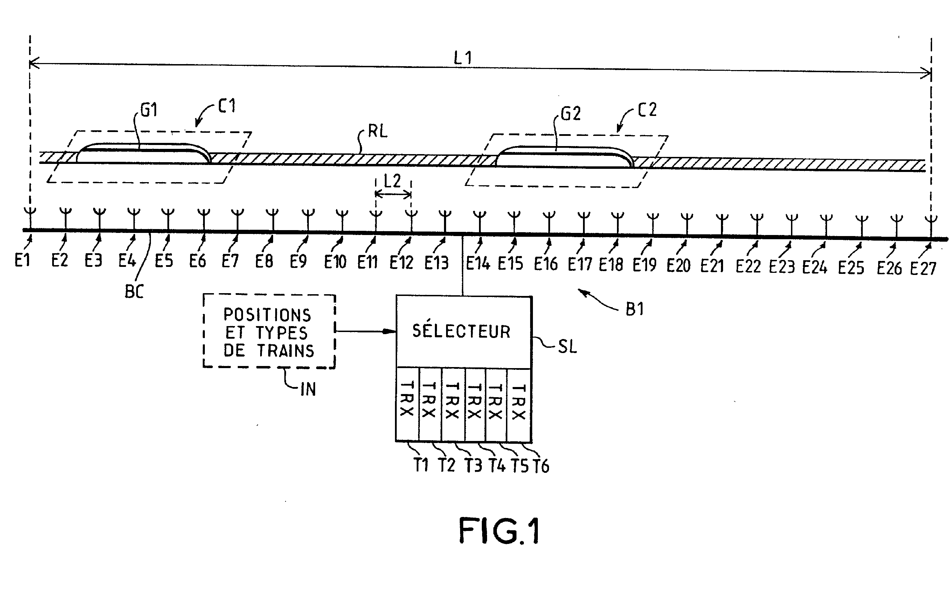

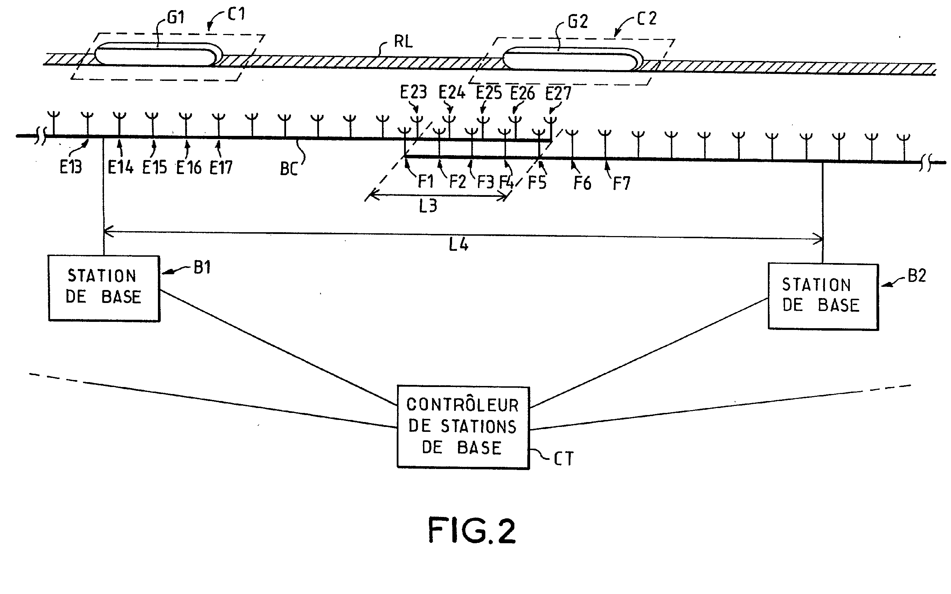

Comme illustré sur les figures 1 et 2, dans un mode de réalisation préférentiel, une station de base B1 selon la présente invention comprend au moins les éléments suivants :
(a) des éléments rayonnants E1, E2, E3, ..., E27 répartis dans la zone de couverture de ladite station ;
(b) des émetteurs-récepteurs T1, T2, T3, ..., T6 ;
(c) un sélecteur SL, permettant de relier N groupes d'éléments rayonnants à N groupes d'émetteurs-récepteurs, pour créer N cellules dont la position est un paramètre variable.

Les éléments rayonnants E1, E2, E3, ..., E27 peuvent être disposés le long d'une voie ferrée RL. Un élément rayonnant comprend par exemple un ou plusieurs amplificateurs et une ou plusieurs antennes. Plusieurs antennes peuvent être reliées à un amplificateur et plusieurs amplificateurs peuvent être reliés à une antenne. Deux éléments rayonnants voisins, tels que E11 et E12, sont disposés de manière à assurer un recouvrement minimum entre eux. Ainsi la distance L2 entre E11 et E12 est telle que les zones couvertes par E11 et E12 se superposent partiellement.

Dans un tunnel par exemple, un élément rayonnant peut comprendre une unique antenne d'émission-réception large bande. Avantageusement, cette antenne peut être une antenne plate de manière à limiter l'encombrement de l'élément rayonnant. Une telle antenne présente avantageusement deux lobes principaux d'émission latéraux, orientés dans des sens opposés de manière à couvrir la voie ferrée RL. Un tel élément rayonnant émettant par exemple à une puissance de l'ordre de 30 dBm peut avoir une couverture efficace (puissance de réception supérieure à -60 dBm) en GSM, DCS ou UMTS de 100 mètres autour de l'élément rayonnant. Ces éléments rayonnants peuvent donc être disposés par exemple tous les 150 mètres. Cette disposition permet d'obtenir un recouvrement entre deux éléments rayonnants de 50 mètres.

A l'air libre, l'encombrement n'étant pas un paramètre critique, un élément rayonnant peut comprendre deux antennes couplées, c'est à dire émettant et recevant les même signaux. Chaque élément rayonnant comprend donc une paire d'antennes orientées dans des sens opposés de manière à couvrir la voie ferrée RL. Les éléments rayonnants à l'air libre peuvent avoir une couverture efficace de plus de 1200 mètres par exemple. Les éléments rayonnants peuvent donc être disposés tous les 1000 mètres lorsque la voie ferrée RL est rectiligne et dégagée. Cette distance est à réduire dans les environnements difficiles.

Par exemple les éléments rayonnants sont plus rapprochés dans les courbures ou les environnements boisés. La position des éléments rayonnants dans les reliefs est également importante. Dans le cas d'une colline, des éléments rayonnants peuvent être placés de part et d'autre de la colline, à égale distance du sommet. Ces deux éléments rayonnants peuvent être remplacés par un unique élément rayonnant placé au sommet de la colline en dirigeant ses antennes convenablement.

S'il n'y a qu'une seule voie ferrée RL (et non plusieurs voies parallèles), on alterne si possible le placement des éléments rayonnants de chaque côté de la voie. Toutefois, si la ligne est incurvée, on place les éléments rayonnants de préférence à l'intérieur de la courbure pour obtenir un bon angle d'incidence.

Les éléments rayonnants peuvent être reliés à une ligne de transmission BC. Avantageusement, cette ligne de transmission est constituée par une ligne haut débit ou un ensemble de lignes haut débit (connue sous le nom de « backbone » dans la littérature anglo-saxonne). Selon un mode de réalisation préférentiel, cette ligne de transmission BC est constituée de fibres optiques.

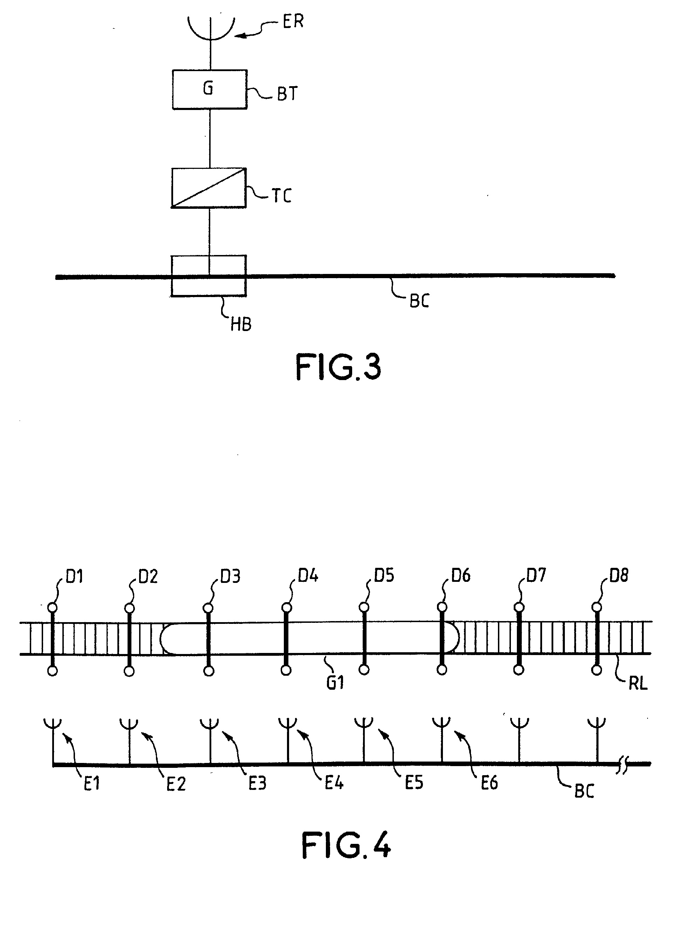

Comme illustré sur la figure 3, selon ce mode de réalisation préférentiel à base de fibres optiques, un élément rayonnant comprend une antenne d'émission et de réception ER d'ondes radio, un amplificateur BT (connu sous le nom de « booster » dans la littérature anglo-saxonne), et un transcodeur optique-radio TC. Pour l'émission, le transcodeur TC transforme le signal optique en provenance de la fibre optique en signal radio. Le signal radio est amplifié par l'amplificateur BT avant d'être émis par l'antenne ER. Pour la réception, le signal radio reçu par l'antenne ER est amplifié par l'amplificateur BT avant d'être transformé, par le transcodeur TC, en signal optique en direction de la fibre.

Les émetteurs-récepteurs (appelés aussi TRX ou encore « transceiver » dans la littérature anglo-saxonne) T1, T2, T3, T4, T5, T6, et le sélecteur SL sont placés dans un terminal. Ce terminal peut être au centre des éléments rayonnants. Un terminal peut comprendre en outre une unité de calcul, un système de climatisation, une réserve d'énergie électrique en cas de panne de courant.

Les éléments rayonnant de la station de base B1 sont répartis le long d'un tronçon de la voie ferrée RL de longueur L1. Cette longueur L1 est telle que la transmission reste de bonne qualité pour le temps maximum de propagation de la station mobile au terminal de la station de base. Pour les réseaux GSM le temps maximum de propagation admis (connu sous le nom de « timing advance ») correspond à un rayon théorique de 32km par rapport au terminal, ce qui correspond à une longueur théorique L1 de 64km (32 km de part et d'autre du terminal). Selon le mode de réalisation préférentiel utilisant des fibres optiques, cette longueur L1 peut être de 50km (soit un rayon de 25km par rapport au terminal) par exemple. On utilise donc pour réaliser la ligne de transmission BC des fibres optiques de 25km. Ces fibres optiques sont placées de part et d'autre du terminal, le long de la voie ferrée RL.

Selon l'invention, les cellules sont générées par quelques éléments rayonnants parmi l'ensemble des éléments rayonnants d'une station de base.

Sur la figure 1, la station de base B1 génère deux cellules C1 et C2. Un premier groupe G1 de stations mobiles est dans la cellule C1. Un second groupe G2 de stations mobiles est dans la cellule C2. Dans cet exemple, les groupes G1 et G2 sont les stations mobiles des passagers de deux trains. Ces trains se suivent sur les rails RL. La cellule C1 est générée par les éléments rayonnants E2, E3, E4, E5, E6 encadrant le premier train. La cellule C2 est générée par les éléments rayonnants E14, E15, E16, E17, E18 encadrant le second train.

Lorsque les groupes G1 et G2 se déplacent, les cellules C1 et C2 suivent ces déplacements. On appelle ces cellules des « cellules suiveuses » car elles suivent les groupes de stations mobiles.

Sur la figure 2, les trains se sont déplacés par rapport à la figure 1. La cellule C1 a suivi le groupe de stations mobiles G1. La cellule C1 est alors générée par les éléments rayonnants E13, E14, E15, E16, E17 encadrant le premier train dans sa nouvelle position. Les cellules C1 et C2 suivent ainsi les trains sur le tronçon de longueur L1. D'une manière générale, les positions de N cellules générées par une station de base sont adaptées aux positions de N groupes de stations mobiles présentes sur le réseau, de manière à suivre le déplacement desdits groupes de stations mobiles. En d'autres termes, la position d'une cellule C1 (respectivement C2) est adaptable à la position d'un groupe de stations mobiles G1 (respectivement G2), de manière à suivre le déplacement dudit groupe de stations mobiles.

L'invention apporte ainsi une solution efficace à la couverture des voies ferrées des réseaux ferroviaires, et ce à l'air libre ou dans les tunnels. Par rapport aux techniques connues, sa mise en oeuvre nécessite beaucoup moins de stations de base pour une couverture équivalente. En effet, les stations de base selon l'invention permettent de générer moins de cellules, celles-ci étant mieux réparties de manière à assurer une couverture équivalente par rapport aux techniques connues.

En référence à la figure 3, chaque élément rayonnant est relié à la ligne de transmission BC par l'intermédiaire d'un noeud HB possédant une adresse. Pour l'émission, le sélecteur SL émet des signaux adressés sur la ligne de transmission BC de manière à acheminer les données des émetteurs-récepteurs vers les éléments rayonnants adéquats. Pour la réception, le sélecteur SL reçoit les signaux adressés de la ligne de transmission BC et les achemine vers les émetteurs-récepteurs adéquats. Le sélecteur SL relie ainsi N groupes d'éléments rayonnants à N groupes d'émetteurs-récepteurs. Par exemple le sélecteur SL relie les émetteurs-récepteurs T1, T2, T3 à la cellule C1 d'une part, et relie les émetteurs-récepteurs T4, T5, T6 à la cellule C2 d'autre part. Chaque train dispose ainsi d'une capacité de trafic correspondant à 3 émetteurs-récepteurs. Bien entendu, le nombre d'émetteurs-récepteurs par station de base peut être différent de 6. De même, le nombre d'émetteurs-récepteurs par cellule peut être différent de 3.

Selon le mode de réalisation préférentiel illustré figure 3, ce noeud HB peut être un noeud concentrateur (connu sous le nom de « hub » dans la littérature anglo-saxonne) possédant une adresse IP (acronyme issu de l'expression anglo-saxonne « Internet Protocol »).

Le sélecteur SL reçoit des informations IN sur la position des groupes de stations mobiles, pour permettre de suivre les groupes de stations mobiles. Par exemple, les informations IN envoyées au sélecteur SL peuvent comprendre les positions des trains. D'autres informations peuvent être envoyées au sélecteur SL. Ces informations additionnelles permettent au sélecteur SL d'agir pour adapter la capacité de trafic des cellules, la taille des cellules ou d'autres paramètres des cellules. Ces informations additionnelles peuvent comprendre le type des trains présents sur le tronçon de voie ferrée.

Selon son type, un train peut requérir plus ou moins de trafic. Un train de type train de marchandise ne requiert pas autant de trafic qu'un train de type train de passager. Il en est de même pour un train de type à un niveau par rapport à un train de type à deux niveaux. Selon un mode de réalisation avantageux, le nombre de canaux de chacune des N cellules est adapté aux nombres de stations mobiles dans chacun des N groupes. A cet effet, le nombre d'émetteurs-récepteurs (TRX) par cellule est adapté au type du train couvert par la cellule. Par exemple le nombre d'émetteurs-récepteurs est moins important pour un train de type train de marchandise que pour un train de type train de passagers.

Selon son type, un train peut avoir une longueur différente. Selon un mode de réalisation avantageux, les tailles des N cellules sont adaptées à l'étendue spatiale des N groupes de stations mobiles, de manière à ce que chaque cellule couvre entièrement toutes les stations mobiles du groupe associé. A cet effet, le nombre d'éléments rayonnants par cellule est adapté à la longueur des trains.

Comme illustré sur la figure 2, un contrôleur de station de base CT (ou BSC, acronyme de l'expression anglo-saxonne « Base Station Controller ») peut être connecté d'un côté au central téléphonique du réseau cellulaire (non représenté) et, de l'autre côté, à plusieurs stations de base B1, B2 selon l'invention. Le contrôleur CT pilote notamment la régulation de l'émission ainsi que le transfert intercellulaire (connu sous le nom de « handover » dans la littérature anglo-saxonne). La régulation de l'émission consiste notamment à allouer les émetteurs-récepteurs (TRX) aux cellules, c'est à dire allouer des canaux de communication.

Le transfert intercellulaire est l'opération qui permet d'assurer la continuité d'une communication lorsqu'une station mobile passe d'une cellule à une autre. Selon l'invention, il n'est pas nécessaire d'effectuer de transfert intercellulaire entre deux cellules générées par une même station de base. En effet, les cellules suivent les déplacements des stations mobiles (lesdites stations mobiles faisant partie d'un groupe de stations mobiles) dans la zone de couverture de la station de base. L'invention permet donc de limiter le nombre de transferts intercellulaires. Il y a ainsi moins de risques de pertes de communication, surtout à grande vitesse. Les transferts intercellulaires nécessaires sont ceux permettant de passer d'une cellule générée par une station de base, à une cellule générée par une autre station de base.

Pour effectuer un transfert intercellulaire correct entre deux cellules, il est nécessaire de disposer d'une zone de recouvrement suffisante entre les deux cellules. Selon l'invention, ces zones de recouvrement sont localisées aux limites des zones couvertes par deux stations de bases voisines. Dans l'exemple de la figure 2, la zone de recouvrement correspond à une longueur L3 sur la voie ferrée RL. La durée totale moyenne utile pour un bon déroulement peut être de 7 secondes par exemple. Dans un tunnel où les trains se déplacent à 140 km/h, cette durée correspond à une distance L3 de 275 mètres. A l'air libre où les trains se déplacent à 300 km/h, cette durée correspond à une distance de 600 mètres.

En passant de la zone couverte par la station de base B1, à la zone couverte par la station de base B2, le groupe de stations mobile G2 passe de la cellule C2 à la cellule C3. Pendant le transfert intercellulaire, les cellules C2 et C3 sont générées simultanément. Chaque station mobile du groupe G2 entame la procédure de transfert intercellulaire dès qu'elle distingue un niveau d'émission suffisant de C3. Une fois le transfert intercellulaire mené à terme, le logiciel pilotant le transfert intercellulaire permet d'éviter l'effet ping-pong, c'est à dire de revenir sur la cellule C2.

La zone de recouvrement nécessaire au transfert intercellulaire est couverte à la fois par des éléments rayonnants E23, E24, E25, E26, E27 de la station de base B1, et par des éléments rayonnants F1, F2, F3, F4, F5 de la station de base B2. Avantageusement, ces éléments rayonnants sont regroupés. Les emplacements où sont placés les éléments rayonnants sont appelés des sites. Ainsi, les éléments rayonnants sont regroupés sur les mêmes sites de manière à limiter le nombre de sites. Les éléments rayonnants E23 et F1 sont placés sur le même site, les éléments rayonnants E24 et F2 sont placés sur le même site, les éléments rayonnants E25 et F3 sont placés sur le même site...

Lorsque deux trains circulant en sens opposés sur deux voies ferrées parallèles se croisent, les stations mobiles présentes dans un train détectent une autre cellule (celle couvrant l'autre train). Plus généralement, lorsque deux groupes de stations mobiles se croisent ou sont à proximité, les stations mobiles d'un premier groupe détectent la cellule couvrant les stations mobiles de l'autre groupe. Le logiciel pilotant le transfert intercellulaire inhibe le transfert intercellulaire dans ce cas.

Selon un mode de réalisation avantageux, les positions des N groupes de stations mobiles peuvent être mesurées de façon répétitive, pour adapter les positions des N cellules à partir desdites mesures. A cet effet, des moyens de détection et de localisation peuvent être positionnés dans la zone de couverture de la station de base. Ils sont reliés fonctionnellement au sélecteur SL. Le sélecteur agit en fonction des mesures transmises par ces moyens de détection et de localisation pour que :
(a) le nombre N de cellules soit égal au nombre de groupes de stations mobiles d'une part ; et, d'autre part
(b) la position des N cellules soit adaptée à la position des N groupes de stations mobiles de manière à suivre le déplacement desdits groupes de stations mobiles.

Comme illustré sur la figure 4, dans un mode de réalisation préférentiel, les moyens de détection et de localisation comprennent des détecteurs D1, D2, D3, D4, D5, D6, D7, D8 placés le long de la voie ferrée RL. Les détecteurs peuvent être des détecteurs de type radar, des cellules photoélectriques. Chaque détecteur permet de détecter la présence d'un train situé en face de ce dernier. Connaissant la position des détecteurs D1, D2, D3, ..., il est possible à la fois de détecter les trains et d'en connaître la position. Bien entendu, il est aussi possible de compter le nombre de trains. On peut disposer les détecteurs tous les 150 mètres par exemple au niveau des éléments rayonnants E1, E2, E3, E4, E5, E6, .... Des moyens de traitements de données, faisant parties de moyens de détections et de localisation, peuvent être situés dans le terminal de la station de base B1. Ces moyens de traitements convertissent les mesures effectuées par les détecteurs en informations IN envoyées au sélecteur SL. Ces moyens de traitements peuvent notamment interpoler la position des trains lorsque ceux-ci sont plus petits que l'espace entre deux détecteurs consécutifs. Dans notre exemple, c'est le cas des trains plus petits que 150 mètres.

Selon un autre mode de réalisation, les moyens de détections et de localisation peuvent être un circuit de voie, c'est à dire un circuit électrique connecté aux rails. Un courant électrique de faible intensité circule dans chaque rail dans ce circuit de voie. Lors d'un passage de train, celui-ci crée un court-circuit entre les rails. Ce court-circuit est utilisé pour déterminer la position des trains sur les rails.

Selon un mode de réalisation préférentiel, les éléments rayonnants sont mis en veille et activés en fonction des positions de cellules. Au fur et à mesure que les groupes de stations mobiles se déplacent, les éléments rayonnants qui encadrent ces groupes sont activés, et ceux qui ne servent plus à la couverture sont mis en veille. Les éléments rayonnants sont activés suffisamment tôt avant l'arrivée du groupe de stations mobiles pour que le signal émis soit stabilisé.

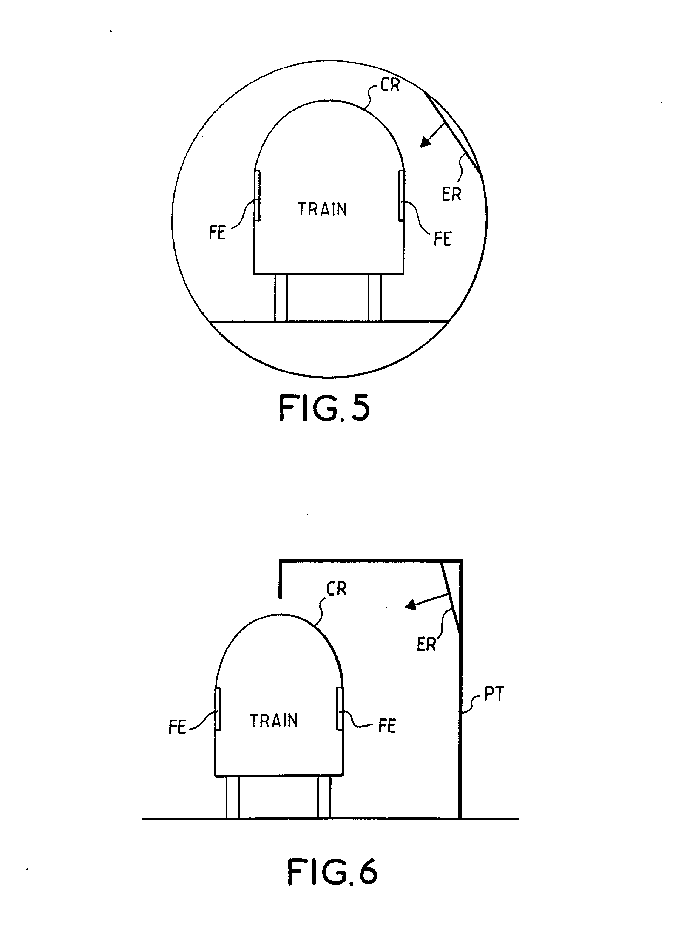

On se réfère maintenant à la figure 5 sur laquelle est illustré un mode de réalisation préférentiel dans les tunnels. Les antennes ER sont des antennes dites « papillon ». Elles rayonnent dans les deux directions du tunnel. L'épaisseur de ces antennes doit être assez réduite pour pouvoir les installer correctement contre la courbure du tunnel.

On se réfère maintenant à la figure 6 sur laquelle est illustré un mode de réalisation préférentiel à l'air libre. Les antennes ER peuvent être installées sur les poteaux PT qui supportent les caténaires. De cette manière, il n'est pas nécessaire d'ajouter de poteaux spécifiques pour supporter les antennes.

La demanderesse a mis en évidence une position d'antenne particulièrement avantageuse pour limiter les pertes à travers les wagons d'un train. Cette position avantageuse est illustrée sur les figures 5 et 6. A priori, les antennes seraient placées à la hauteur des fenêtres FE. Les tests et mesures effectués par la demanderesse ont mis en évidence qu'il est préférable de placer les antennes au dessus des fenêtres FE, notamment au niveau de la courbure CR du toit des wagons. Ceci correspond par exemple à une hauteur par rapport au sol de l'ordre de 4 à 6 mètres pour les trains TGV de la SNCF. La distance entre le train et l'antenne peut être de 2 mètres par exemple. Les antennes ER sont orientées vers le train, de manière à émettre dans une direction sensiblement normale à la courbure CR.

Selon un mode de réalisation préférentiel, les stations de base génèrent non seulement des cellules suiveuses mais aussi des cellules fixes. Les stations de base peuvent générer des cellules fixes pour les besoins de communication des équipes de maintenance par exemple. Ces besoins de communication étant faibles, une cellule unique fixe peut être générée par station de base. Les cellules fixes permettent ainsi d'assurer une couverture de manière continue sur toute l'étendue de la zone de couverture des stations de bases. Les cellules suiveuses permettent quant à elles d'augmenter localement le nombre de canaux de communication disponibles lors du passage d'un groupe de stations mobiles.

Bien entendu, l'invention ne se limite pas aux exemples précédents. Il est possible d'effectuer des variantes sans sortir du cadre de l'invention. Les antennes des éléments rayonnants peuvent être des cornets, des spires rayonnantes, des antennes réseaux à pastille ou tout autre type d'antenne. Un élément rayonnant peut avoir plusieurs antennes, ces antennes étant adaptées par exemple à des bandes de fréquences différentes. Il est possible aussi d'utiliser des voies différentes pour l'émission et la réception dans chaque élément rayonnant. Il est possible aussi d'utiliser des éléments rayonnants mobiles ou orientables pour générer des cellules suiveuses.

Les éléments rayonnants peuvent être reliés au sélecteur SL de manière différente. Ils ne sont pas nécessairement reliés entre eux par une ligne de transmission. Par exemple ils peuvent être reliés au sélecteur de manière à former un réseau en étoile. Le sélecteur SL peut alors être un sélecteur électromécanique par exemple.

L'invention ne s'applique pas uniquement à la couverture des voies ferrées. Elle peut s'appliquer par exemple à la couverture des autoroutes. Les cellules suiveuses se déplacent alors à la vitesse moyenne des automobiles. En cas d'embouteillages, les tailles des cellules peuvent être réduites.

Bien entendu, l'invention s'applique à tout type de réseau de communication cellulaire public (connu sous le nom de « private-mobile-radio » ou PMR dans la littérature anglo-saxonne) ou privé (connu sous le nom de « public-access mobile radio » ou PAMR dans la littérature anglo-saxonne).

Le réseau de communication cellulaire selon l'invention peut aussi être compatible avec la technologie GSM-R (acronyme de l'expression anglo-saxonne « Global system for mobile radio communication for railways »). Cette technologie, basée sur la technologie GSM, est adaptée aux besoins de communications spécifiques aux réseaux ferroviaires. Elle a été développée par l'Union Internationale des Chemins de Fer (UIC) dans le cadre du projet EIRENE (acronyme de « European Integrated Railway Radio Enhanced Network »). Ce projet a conduit à des spécifications dont spécifications « GSM-R : Global system for mobile radio communications for railways », de H. Hofestaedt, Proceeding of the International Conference on Electric Railways in a United Europe, Amsterdam, Neth (27 Mars 1995 - 30 Mars 1995). Les spécifications étés converties en normes par l'ETSI. On peut citer la norme STF 139.

## Revendications

1. Procédé d'optimisation du trafic d'un réseau de communication cellulaire, **caractérisé en ce que** les positions de N cellules (C1, C2) dudit réseau sont adaptées aux positions de N groupes (G1, G2) de stations mobiles présentes sur ledit réseau, de manière à suivre le déplacement desdits groupes de stations mobiles.

2. Procédé selon la revendication 1, **caractérisé en ce que** les positions des N groupes (G1, G2) de stations mobiles présentes sur ledit réseau sont mesurées de façon répétitive, pour adapter les positions des N cellules à partir desdites mesures.

3. Procédé selon la revendication 1 ou 2, **caractérisé en ce que** les tailles des N cellules (C1, C2) dudit réseau sont adaptées à l'étendue spatiale des N groupes (G1, G2) de stations mobiles, de manière à ce que chaque cellule couvre entièrement toutes les stations mobiles du groupe associé.

4. Procédé selon la revendication 1, 2 ou 3, **caractérisé en ce que** le nombre de canaux de chacune des N cellules est adapté aux nombres de stations mobiles dans chacun des N groupes.

5. Procédé selon la revendication 1, 2, 3 ou 4, **caractérisé en ce que** les groupes de stations mobiles sont localisés dans des trains circulant.

6. Cellule (C1, C2) d'un réseau de communication cellulaire, **caractérisée en ce qu'**elle est générée par des moyens de génération qui adaptent sa position à la position d'un groupe (G1, G2) de stations mobiles présentes sur ledit réseau, de manière à suivre le déplacement dudit groupe de stations mobiles.

7. Cellule (C1, C2) selon la revendication 6, **caractérisée en ce que** sa position est adaptée à partir de mesures répétitives des positions du groupe (G1, G2) de stations mobiles.

8. Cellule (C1, C2) selon la revendication 6 ou 7, **caractérisée en ce que** sa taille est adaptée à l'étendue spatiale du groupe (G1, G2) de stations mobiles, de manière à ce qu'elle couvre entièrement toutes les stations mobiles dudit groupe.

9. Cellule (C1, C2) selon la revendication 6, 7 ou 8, **caractérisée en ce que** le nombre de canaux de ladite cellule est adapté aux nombres de stations mobiles dans le groupe.

10. Cellule (C1, C2) selon la revendication 6, 7, 8 ou 9, **caractérisée en ce que** le groupe (G1, G2) de stations mobiles est localisé dans un train circulant.

11. Station de base (B1) d'un réseau de communication cellulaire **caractérisée en ce qu'**elle comprend au moins les éléments suivants :
(a) des éléments rayonnants (E1, E2, E3, ..., E27) répartis dans la zone de couverture de ladite station ;
(b) des émetteurs-récepteurs (T1, T2, T3, ..., T6) ;
(c) un sélecteur (SL), permettant de relier N groupes d'éléments rayonnants à N groupes d'émetteurs-récepteurs, pour créer N cellules (C1, C2) dont la position est un paramètre variable.

12. Station selon la revendication 11, **caractérisée en ce que** les positions des N cellules (C1, C2) créées par le sélecteur (SL) sont adaptées aux positions de N groupes (G1, G2) de stations mobiles qui sont positionnées dans la zone de couverture de la station, de manière à suivre le déplacement desdits groupes de stations mobiles.

13. Station selon la revendication 11 ou 12, **caractérisée en ce qu'**elle comprend en outre des moyens (D1, D2, D3, ..., D8) de détection et de localisation des groupes (G1, G2) de stations mobiles qui sont positionnés dans la zone de couverture de la station, lesdits moyens de détection et de localisation étant reliés fonctionnellement au sélecteur (SL), le sélecteur agissant en fonction des mesures transmises par les moyens de détection et de localisation pour que :
(a) le nombre N de cellules (C1, C2) soit égal au nombre de groupes (G1, G2) de stations mobiles d'une part ; et, d'autre part
(b) la position des N cellules (C1, C2) soit adaptée à la position des N groupes (G1, G2) de stations mobiles de manière à suivre le déplacement desdits groupes de stations mobiles.

14. Station (B1) selon la revendication 11, 12 ou 13, **caractérisée en ce que** les tailles des N cellules (C1, C2) dudit réseau sont adaptées à l'étendue spatiale des N groupes (G1, G2) de stations mobiles, de manière à ce que chaque cellule couvre entièrement toutes les stations mobiles du groupe associé.

15. Station (B1) selon la revendication 11, 12, 13 ou 14, **caractérisée en ce que** le nombre de canaux de chacune des N cellules (C1, C2) est adapté aux nombres de stations mobiles dans chacun des N groupes (G1, G2).

16. Station (B1) selon la revendication 11, 12, 13, 14 ou 15, **caractérisée en ce qu'**elle génère non seulement des cellules dont la position est un paramètre variable, mais aussi des cellules fixes.

17. Station (B1) selon la revendication 11, 12, 13, 14, 15 ou 16, **caractérisée en ce que** les groupes de stations mobiles sont localisés dans des trains circulant.

18. Station (B1) selon la revendication 17, **caractérisée en ce que** les éléments rayonnants comprennent des antennes (ER) placées au dessus des fenêtres (FE) des wagons, au niveau de la courbure (CR) du toit de wagons.

19. Station (B1) selon la revendication 17 ou 18, **caractérisée en ce que** les éléments rayonnants comprennent des antennes (ER) placées sur les poteaux (PT) qui supportent les caténaires.
